# EUROPEAN PATENT SPECIFICATION

(11) **EP 3 293 212 B1**
(45) Date of publication and mention of the grant of the patent: **22.02.2023**
(21) Application number: 16188339.2
(22) Date of filing: 12.09.2016
(51) Int. Cl.: C08F 2/00, C08L 23/06

(54) **POLYMER COMPOSITION FOR CONTAINER CLOSURES**
POLYMERZUSAMMENSETZUNG FÜR BEHÄLTERVERSCHLÜSSE
COMPOSITION POLYMÈRE POUR LA FERMETURE D'UN RÉCIPIENT

(43) Date of publication of application: 14.03.2018
(73) Proprietor: Thai Polyethylene Co., Ltd., 10800 Bangkok (TH); SCG Chemicals Co., Ltd., Bangkok 10800 (TH)
(72) Inventor: SARANYA, Traisilanun, 10800 Bangkok (TH); WATCHAREE, Cheevasrirungruang, 10800 Bangkok (TH); KITTIPONG, Koomsup, 10800 Bangkok (TH); SONTHAYA, Srijumnong, 10800 Bangkok (TH)
(74) Representative: Scholz, Volker

(56) References cited:
- EP-A1- 1 790 580
- WO-A1-2006/045550

## Description

The present invention relates to a polymer composition and a container closure comprising this polymer composition.

It is known that improved materials and closures design have led to the creation of one-piece caps that offer the same sealing surface as two-piece closures, allowing such polyethylene caps to be widely used in carbonated soft drink and hot-fill applications.

Polyethylene is known as the material offering all essential performances to the demanding requirements of closure applications, including high environmental stress cracking resistance, good retention for CO₂, good stiffness and toughness balance, fast cycle time, good opening torque and good organoleptic properties. Various polymer compositions for cap and closures with different properties are disclosed in US2013/0237652 A1, EP2365995 B1, EP2052026 B1, and EP1462378 A2. However the properties of environmental stress cracking resistance (ESCR) and fast cycle time which allow the polyethylene cap to meet the next trend of closure design and higher production capability are still interesting issues to improve both required properties for end users and cap manufacturer.

US2013/0237652 A1 discloses bimodal high density polyethylene composition for producing moulded articles comprising bimodal high density polymer (Component A) in combination with an alpha-nucleating agent (Component B), a slip agent being primary fatty acid amide (Component C), and one or more additives selected from antioxidants, acid scavengers, pigments and UV-stabilizers (Component D). The composition shows an increased crystallization temperature and decreased coefficient of friction compared to the sole use of nucleating agent or slip agent.

EP2052026 B1 discloses a composition for producing closure devices. A high-density polyethylene composition having density in the range of 0.950 to 0.960 g/cm³ and a melt index of at least 1 g/10 minutes comprises first and second polymer components. The first component is a high molecular weight ethylene alpha-olefin copolymer having a density in the range of 0.920 to 0.946 g/cm³ and a melt index in the range of 1 to 15 g/10 minutes. The second component is a low molecular weight ethylene polymer having a density in the range of 0.965 to 0.980 g/cm³ and a melt index in the range of 30 to 1500 g/10 minutes. The bottle cap and closures produced from this composition have an environmental stress cracking of at least 10 hours measured via ASTM D 1693 condition B, and a standard deviation of flow direction shrinkage of less than 7.

EP2365995 B1 discloses a composition for producing beverage bottle caps which comprises a multimodal polyethylene and a nucleating agent. The suitable multimodal polyethylene comprises from 20 to 40 % of a low molecular weight ethylene homopolymer component, from 20 to 40 % of medium molecular weight ethylene copolymer component and from 20 to 40 % of 20 to 30% of high molecular weight ethylene copolymer component. The composition has an environmental stress cracking resistance measured according to ASTM D 1693, Condition B of greater than or equal to 40 days and a crystallization half time of less than or equal to 70% of the crystallization half time of multimodal polyethylene without the nucleating agent.

EP1462378 A2 discloses a composition for making a screw cap. The composition bases on a multimodal ethylene polymer having a standard density greater than 0.950 g/cm³ and a melt flow index of less than 2 g/10 minutes, said multimodal ethylene polymer comprising fraction A having a standard density of more than 0.965 g/cm³ and a melt flow index of at least 10 g/min and fraction B having a melt flow index of at least 0.03 g/ minutes but not less than 10 g/ minutes and at least one alpha-olefin containing from 3 to 12 carbon atoms. The composition has an ESCR (B) of greater than 800 hours.

Environmental stress cracking is the major cause of plastic part failures. Stress cracking in service is due to the moulded-in (residual) stress in the moulding. The moulded-in stresses are induced by unbalanced flow of melt, un-equal freezing of melt and over packing during follow-up pressure phase of moulding. This can be tackled at the part design and mould design stage of any plastic part development. It should be possible to get minimum or even zero moulded-in stresses at design stage. If the residual stress exists, then the influence of chemicals on particular plastic should be studied. Testing a plastic with test samples may not give practical results as samples are moulded without residual stress or with lower level of residual stress. Therefore, performance of sample test piece for stress cracking test may not be very helpful.

It is an object of the present invention to provide a polymer composition which is suitable for preparing container closures therewith overcoming drawbacks of the prior art, in particular a polymer composition having high stress cracking resistance as measured by FNCT (Full Notch Creep Test) with good balance of crystallization speed to achieve high stress cracking resistance in cap and fast cycle time as well as good flowability during injection.The object is achieved by a polymer composition and a container closure according to the independent claims. Preferred embodiments result from the sub-claims.

This object is achieved by a polymer composition comprising an ethylene homopolymer and an ethylene copolymer comprising a comonomer in an amount of at least 0.55 mol% with respect to the total amount of monomer in the ethylene copolymer, wherein the ethylene copolymer has a higher weight average molecular weight than the ethylene homopolymer, the polymer composition has a density in the range of 0.950-0.965 g/cm3 measured according to ASTM D 1505, a melt flow rate MFR2 of at least 0.3 g/10 minutes measured according to ASTM D 1238, a weight average molecular weight of at least 100,000 g/mol, a viscosity at an angular frequency of 0.01 [1/s], η0.01, of at least 20,000 Pa.s measured using controlled stress rheometer model MCR-301 from Anton-Paar with the geometry being plate-plate 25 mm diameter at the measurement gap 1 mm, the dynamic oscillatory shear performing at angular frequence 0.01-600 rad/s at 190°C under nitrogen atmosphere, the sample preparation being performed to circular disk 25 mm by compression molding at 190°C and the viscosity at 0,01 [1/s] being obtained from complex viscosity at a specific shear rate of 0.01 [1/s];whereinthe polymer composition has an Isothermal Crystallization Half-Time, which is less than 10 minute at 123°C,wherein the Isothermal Crystallization Half-Time at 123°C is measured by DSC is measured under the following conditions: heating the sample from 30°C to 200°C at a heating rate of 50°C/min and holding for 5 min, then cooling down to 123°C at a cooling rate of 50°C/min and holding for 60 min; and a Full Notch Creep Test of at least 60 hours according to ISO 16770; the comonomer is selected from the group consisting of C4-10 alpha-olefins, preferably 1-butene, 1-pentene, 1-hexene, 1-heptene, 1-octene or mixtures thereof;wherein the amount of co-monomer is in the range of 0.55 mol% to 1.5 mol %, with respect to the total amount of monomer in the ethylene copolymer;wherein the melt flow rate MFR2 of the polymer composition is in the range of 0.3-2.0 g/10 minutes.

More preferred, the polymer composition has a weight average molecular weight from 100,000 g/mol to 300,000 g/mol, preferably from 150,000 g/mol to 200,000 g/mol.

Most preferred, the polyethylene has a polydispersity index from 13-23, preferably from 15-20.

Furthermore, it is preferred that the weight ratio of the ethylene homopolymer and the ethylene copolymer in the polymer composition is in the range of 45:55 to 55:45.

The inventive polymer composition further preferably comprises a nucleating agent, preferably in an amount from 80-2000 ppm.

More preferred, the nucleating agent is selected from cyclohexane dicarboxylic acid, calcium salt, zinc salt, zinc stearate and mixtures thereof.

It is also preferred that the calcium salt is selected from calcium hexahydrophthalate or calcium glycerolate, and/or wherein the zinc salt is selected from zinc hexahydrophthalate or zinc glycerolate.

The object of the present invention is further achieved by a container closures comprising the polymer composition according to the invention.

Furthermore, the container closure may be obtained by injection molding or compression molding.

Finally, the object of the present invention is achieved by use of a container closures according to the invention as a beverage bottle cap.

Generally ESCR for cap and closure is measured directly on the bottled cap. The measured cap ESCR is affected by the residual stress in the injection conditions, for example injection speed, injection temperature and cooling speed. Material also generates some influence on the residual stress from their relaxation, flow and crystallization behavior.

A nucleating agent is widely used in various applications of plastics especially for injection to enhance fast crystallization speed and increase stiffness. The selection of particular type of nucleating agent can increase crystallization speed with less effect to stress cracking performance.

The ethylene homopolymer is preferably a low average molecular weight polyethylene homopolymer preferably having an MFR₂ of 40 - 400 g/10 minutes, preferably 50 to 250 g/10 minutes and a density of at least 0.965 and preferably 0.965 to 0.975 g/cm³.

The weight ratio between the ethylene homopolymer and the ethylene copolymer (preferably being a low average molecular weight ethylene homopolymer fraction and a high average molecular weight ethylene copolymer fraction) is in the range of 40:60 to 60:40, preferably 45:55 to 55:45. The manufacture of the polymer composition according to the invention can be carried out in slurry with solvent, preferably n-hexane, diluent through multi-stage polymerization in cascade reactors connected in series.

The polymerization catalyst includes coordination catalysts of a transition metal, i.e. Ziegler-Natta (ZN) or metallocenes. The catalyst may be supported with conventional support material including magnesium chloride or silica. Preferably the catalyst is a ZN catalyst, most preferably a MgCl₂-based ZN catalyst.

The nucleating agent can be selected from cyclohexanedicarboxylic acid, calcium salt, zinc salt, zinc stearate, and mixture thereof. The calcium salt may be selected from calcium hexahydrophthalate or calcium glycerolate. The zinc salt may be selected from zinc hexahydrophthalate or zinc glycerolate. Preferably the nucleating agent is used in an amount within the range of 80 - 2000 ppm, preferably 80 -1000 ppm.

The polymer composition according to the present invention has a isothermal crystallization half-time (ICHT) of less than 10 minutes at 123°C and a full notched creep test (FNCT) in the range of 50-100 hours. Preferably, ICHT is in the range of 1.5-9.5, more preferably 2-9 minutes at 123°C. Also preferred, the FNCT is at least 60 hours, preferably in the range of 60-100 hours.

The polymer composition of the present invention is at least bimodal, preferably a bimodal polyethylene composition.

Even further, it is preferred that the polymer composition has an environmental stress crack resistance (ESCR, F50) of greater than 200 hours, preferably greater than 1000 hours. The polymer may have a spiral flow at 190°C in the range of 200-400 mm.

It was surprisingly found that the polymer composition of the present invention can be advantageously utilized in preparing container closures. Polymer compositions of the present invention provide high FNCT and low Isothermal Crystallization Half-Time (ICHT) and further provide a cap ESCR of more than 28 days. Further, the inventive composition shows good flowability as measured by the spiral flow test.

If the polymer composition is used in a preferred embodiment with the addition of a nucleating agent, the crystallization half-time may be significantly improved while stiffness is increased and cap ESCR is still maintained at 14 days.

Further features and advantages of the present invention can be taken from the following detailed description and the examples.

### Definition and measurement method

MFR₂: Melt flow rate of polymer was measured according to ASTM D 1238 and indicated in g/10 minutes that determines the flowability of polymer under testing condition at 190 °C with load 2.16 kg.

Density: Density of polymer was measured by observing the level to which a pellet sinks in a liquid column gradient tube, in comparison with standards of known density. This method is determination of the solid plastic after annealing at 120 °C following ASTM D 1505.

Comonomer content: The comonomer content was determined by high resolution ¹³C-NMR in mol%. ¹³C-NMR spectra were recorded by 500 MHz ASCENDTM, Broker, with cryogenic 10 mm probe. TCB was used as major solvent with TCE-d2 as locking agent in the ratio of 4:1 by volume. The NMR experiments were carried on at 120 °C, and the inverse gate 13C (zgig) of pulse program with 90° for pulse angle were used. The delay time (D1) was set to 10 seconds for full-spin recovery.

Polydispersity index (PPI): The weight average molecular weight (Mw), the number average molecular weight (Mn) in g/mol were analysed by gel permeation chromatography (GPC). Polydispersity index was calculated by Mw/Mn. Gel permeation chromatography (GPC): around 8 mg of sample was dissolved in 8 ml of 1,2,4-trichlorobenzene at 160 °C for 90 min. Then, the sample solution, 200 µl was injected into the high temperature GPC with IR5, an infrared detector (Polymer Char, Spain), with low rate of 0.5 ml/min at 145 °C in column zone and 160 °C in detector zone. The data was processed by GPC One^{®} Software, Polymer Char, Spain.

Viscosity at angular frequency 0.01 [1/s] (η_{0.01}): Rheological parameters are determined by using controlled stress rheometer model MCR-301 from Anton-Paar. The geometry is Plate-Plate 25 mm diameter at the measurement gap 1 mm. The dynamic oscillatory shear performs at angular frequency (ω) 0.01-600 rad/s at 190 °C under nitrogen atmosphere. The sample preparation is performed to circular disk 25 mm by compression molding at 190 °C. Viscosity at 0.01 [1/s] (η_{0.01}) is obtained from complex viscosity at a specific shear rate 0.01 [1/s].

Isothermal Crystallization Half-Time (ICHT): The isothermal crystallization half-time at 123 °C was measured by DSC under specific condition to determine the crystallization rate of the sample. The sample was heated from 30 °C to 200 °C at a heating rate of 50 °C/min and held for 5 min. Then, it was cooled down to 123 °C at cooling rate 50 °C/min and held for 60 min.

Full Notch Creep Test (FNCT): The full notch creep test according ISO 16770 was the preferred way of measuring the stress crack resistance of a polymer at constant load of 5.78 MPa at 50 °C in 2% Arkopal solution.

ESCR (F50 method B): Environmental stress crack resistance (ESCR) was measured according to ASTM D1693. Experiments were conducted at 50 °C in a temperature bath containing 10% vol. by vol. of Igepal (nonyl phenyl ethoxylate) solution. Samples were conditioned at 23 °C and 50% relative humidity for at least 48 h before testing. The notches were inserted using a cutting blade for notching specimens. At least ten samples were tested to determine the average values. Then, samples were examined until 50% of samples cracked and reported as ESCR (F50).

Cap ESCR or Stress cracking resistance of cap: 10 caps are closed onto PET bottles with gas volume inside at 4.2 GV CO₂ by using theory ratio between sodium bicarbonate and citric acid. After preparation 1 day, the PET bottles with screwed cap are aged in an oven at temperature 38 °C. Stress cracking on the cap will be inspected everyday by optical microscope, and record the time (day) that the crack appears.

Spiral Flow Test: Spiral flow test was carried out by Fanuc Roboshot S2000i 100B injection molding machine with spiral mould at various temperature respectively 190 °C and constant injection pressure 1000 bar. The thickness of specimen is 1 mm. After conditioning sample for 24 hr, the spiral flow length (mm) was measured.

Flexural Modulus and Flexural Strength: The specimen was prepared and performed the test according to ASTM D 790. The flexural tests were done using a universal testing machine equipped with three point bending fixture.

IZOD impact strength: The Izod impact strength testing was done following ASTM D 256 to determine the impact resistance of materials. Its impact energy is determined. A notched sample is generally used to determine impact energy at temperature of 23 °C.

### Examples

The examples for this invention are illustrated as shown in Table 1, 2 and 3.

### Examples 1-2 (Comparative)

Examples 1 and 2 were comparative resins which were bimodal polyethylene composition produced from Ziegler-Natta catalyst Example 1 is a commercial bimodal polyethylene ELTEX^{®} Superstress CAP602 (Ineos). Example 2 is a bimodal polyethylene composition which polymerized following the condition in Table 1.

### Examples 3-5 (Inventive)

Examples 3 to 5 were bimodal polymer composition according to this invention. Example 5 includes 100 ppm of nucleating agent (Hyperform HPN-20E^{®}). The properties of polyethylene composition used in comparative Examples 1 and 2 and inventive Examples 3-5 are given in Table 2 below.

The results given in Table 3 indicated that the inventive samples have ICHT lower than 10 min. The inventive polyethylene composition provides faster crystallization speed and better stress crack resistance properties as measured by FNCT and ESCR (method B; F50) than the comparative examples.

In Examples 3 and 4 and Comparative Example 1, polyethylene composition corresponding to the typical MFR₂ and density of screw cap were synthesized. As shown in Table 3, Examples 3 and 4 show higher molecular weight (Mw) of ethylene copolymer, broader molecular weight distribution as indicated by Polydispersity Index (PDI) and higher viscosity at angular frequency 0.01 [1/s]. The properties including Isothermal Crystallization Half-Time (ICHT), stress cracking resistance as measured by FNCT and spiral flow are superior to the comparatives. The CAP ESCR is equivalent among each other.

In Examples 5 and Comparative Example 2, nucleating agent called HPN20E^{®} is added in Example 5. Example 2 is controlled for narrow molecular weight distribution by increasing molecular weight of a polyethylene homopolymer. The physical properties especially flexural modulus is equivalent for both examples. However; Example 5 shows significant improvement in crystallization half time and much better FNCT, ESCR F50 and impact strength.

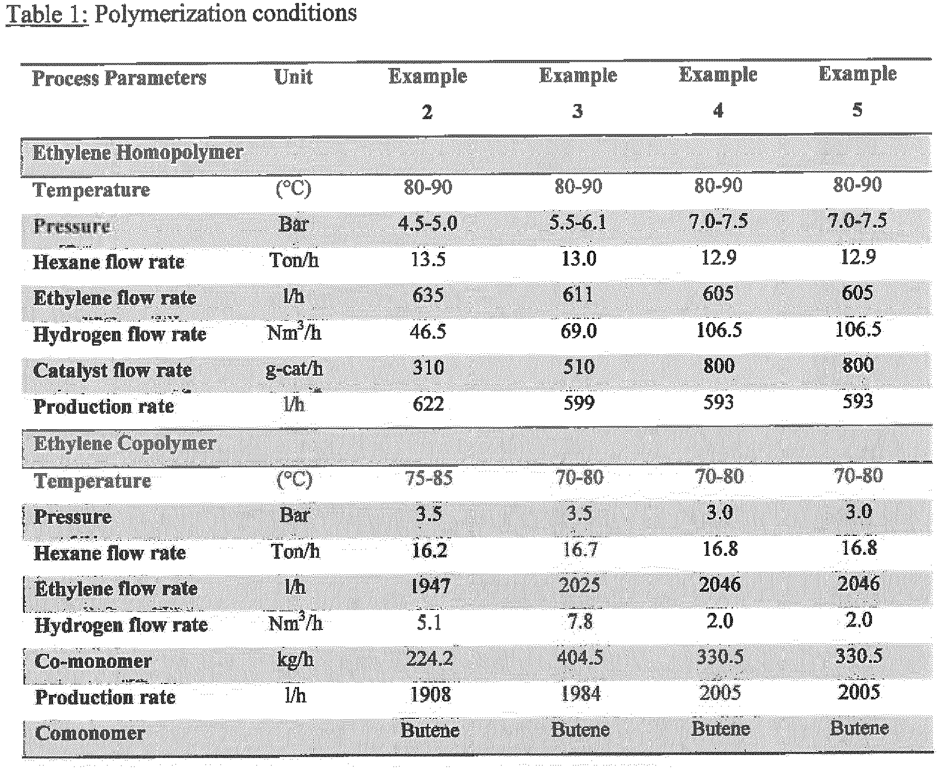

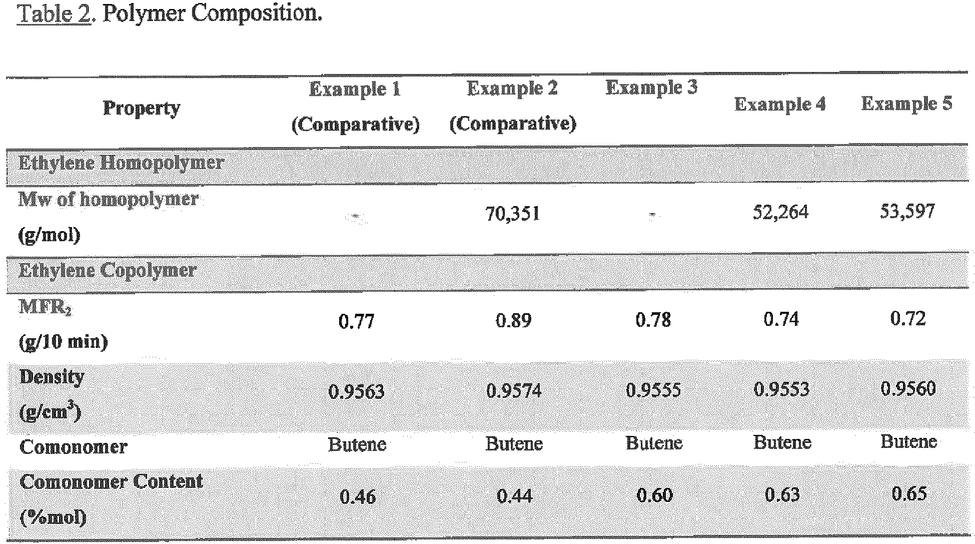

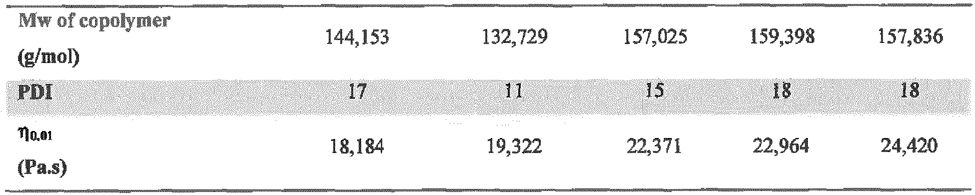

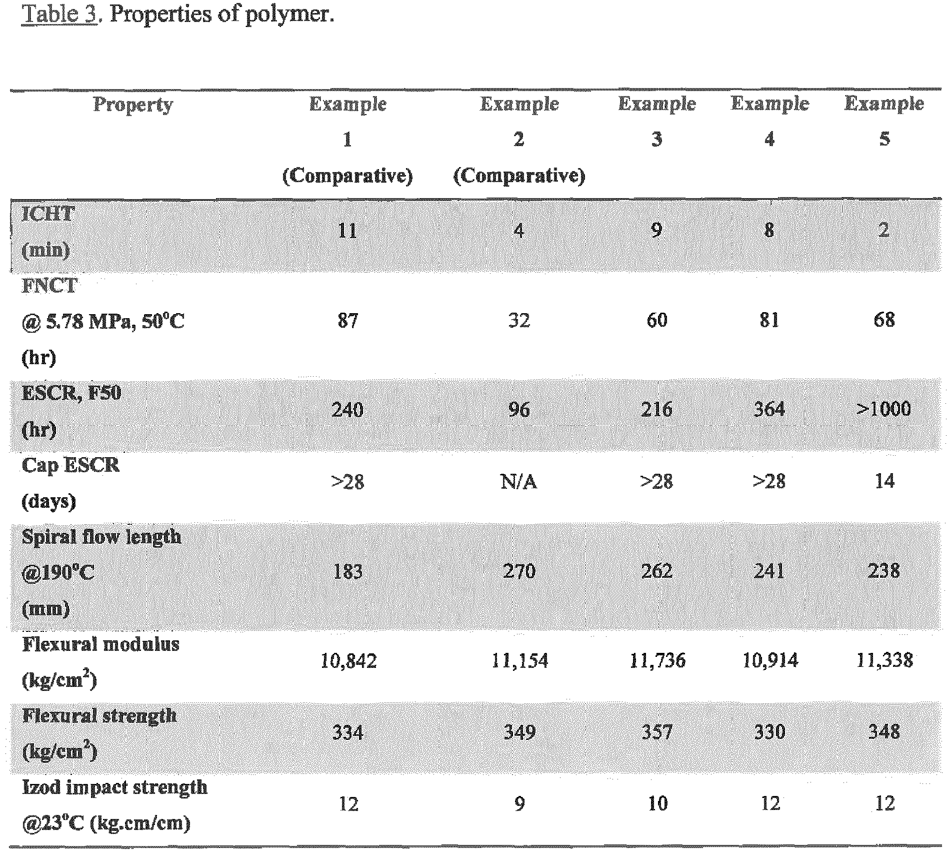

The features disclosed in the foregoing description and in the claims may, both separately and in any combination be material for realizing the invention in diverse forms thereof.

## Claims

1. Polymer composition comprising an ethylene homopolymer and an ethylene copolymer comprising a comonomer in an amount of at least 0.55 mol% with respect to the total amount of monomer in the ethylene copolymer, wherein the ethylene copolymer has a higher weight average molecular weight than the ethylene homopolymer, the polymer composition has a density in the range of 0.950-0.965 g/cm³ measured according to ASTM D 1505, a melt flow rate MFR₂ of at least 0.3 g/10 minutes measured according to ASTM D 1238, a weight average molecular weight of at least 100,000 g/mol, a viscosity at an angular frequency of 0.01 [1/s], η_{0.01}, of at least 20,000 Pa.s measured using controlled stress rheometer model MCR-301 from Anton-Paar with the geometry being plate-plate 25 mm diameter at the measurement gap 1 mm, the dynamic oscillatory shear performing at angular frequence 0.01-600 rad/s at 190°C under nitrogen atmosphere, the sample preparation being performed to circular disk 25 mm by compression molding at 190°C and the viscosity at 0,01 [1/s] being obtained from complex viscosity at a specific shear rate of 0.01 [1/s];
wherein
the polymer composition has an Isothermal Crystallization Half-Time, which is less than 10 minute at 123°C,wherein the Isothermal Crystallization Half-Time at 123°C is measured by DSC is measured under the following conditions: heating the sample from 30°C to 200°C at a heating rate of 50°C/min and holding for 5 min, then cooling down to 123°C at a cooling rate of 50°C/min and holding for 60 min; and a Full Notch Creep Test of at least 60 hours according to ISO 16770; the comonomer is selected from the group consisting of C4-10 alpha-olefins, preferably 1-butene, 1-pentene, 1-hexene, 1-heptene, 1-octene or mixtures thereof;
wherein the amount of co-monomer is in the range of 0.55 mol% to 1.5 mol, % with respect to the total amount of monomer in the ethylene copolymer;
wherein the melt flow rate MFR2 of the polymer composition is in the range of 0.3-2.0 g/10 minutes.

2. Polymer composition according to claim 1, wherein the polymer composition has a weight average molecular weight from 100,000 g/mol to 300,000 g/mol.

3. Polymer composition according to any of the preceding claims, wherein the polyethylene has a polydispersity index from 13-23.

4. Polymer composition according to any of the preceding claims, wherein the weight ratio of the ethylene homopolymer and the ethylene copolymer in the polymer composition is in the range of 45:55 to 55:45.

5. Polymer composition according to any of the preceding claims, further comprising a nucleating agent.

6. Polymer composition according to claim 5, wherein the nucleating agent is selected from cyclohexane dicarboxylic acid, calcium salt, zinc salt, zinc stearate and mixtures thereof.

7. Polymer composition according to claim 6, wherein the calcium salt is selected from calcium hexahydrophthalate or calcium glycerolate, and/or wherein the zinc salt is selected from zinc hexahydrophthalate or zinc glycerolate.

8. Container closure comprising the polymer composition according to any of the preceding claims.

9. Container closure according to claim 8, obtainable by injection molding or compression molding.

10. Use of a container closure according to claim 8 or 9 as a beverage bottle cap.

## Patentansprüche

1. Polymerzusammensetzung, umfassend ein Ethylenhomopolymer und ein Ethylencopolymer, umfassend ein Comonomer in einer Menge von mindestens 0,55 mol-%, bezogen auf die Gesamtmenge an Monomer in dem Ethylencopolymer, wobei das Ethylencopolymer ein höheres gewichtsmittleres Molekulargewicht als das Ethylenhomopolymer aufweist, wobei die Polymerzusammensetzung eine Dichte im Bereich von 0,950-0,965 g/cm³, gemessen gemäß ASTM D 1505, eine Schmelzflussrate MFR2 von mindestens 0,3 g/10 Minuten, gemessen gemäß ASTM D 1238, ein gewichtsmittleres Molekulargewicht von mindestens 100.000 g/mol, eine Viskosität bei einer Winkelfrequenz von 0,01 [1/s], 0,01, von mindestens 20.000 Pa.s, gemessen unter Verwendung des kontrollierten Spannungsrheometers Modell MCR-301 von Anton-Paar, wobei die Geometrie ein Platte-Platte-Durchmesser von 25 mm bei dem Messspalt von 1 mm ist, wobei die dynamische Oszillationsscherung bei einer Winkelfrequenz von 0,01-600 rad/s bei 190 °C unter Stickstoffatmosphäre durchgeführt wird, wobei die Probenvorbereitung auf einer kreisförmigen Scheibe von 25 mm durch Formpressen bei 190 °C durchgeführt wird und die Viskosität bei 0,01 [1/s] aus komplexer Viskosität bei einer spezifischen Scherrate von 0,01 [1/s] erhalten wird;
wobei
die Polymerzusammensetzung eine isotherme Kristallisations-Halbzeit aufweist, die weniger als 10 Minuten bei 123 °C beträgt,wobei die isotherme Kristallisations-Halbzeit bei 123 °C durch DSC gemessen wird, gemessen unter den folgenden Bedingungen: Erwärmen der Probe von 30 °C auf 200 °C bei einer Erwärmungsrate von 50 °C/min und Halten für 5 min, dann Abkühlen auf 123 °C bei einer Abkühlrate von 50 °C/min und Halten für 60 min; und einen Vollkerbkriechtest von mindestens 60 Stunden gemäß ISO 16770; wobei das Comonomer ausgewählt ist aus der Gruppe bestehend aus C4-10 -alpha-Olefinen, vorzugsweise 1-Buten, 1-Penten, 1-Hexen, 1-Hepten, 1-Octen oder Mischungen davon;
wobei die Menge an Comonomer im Bereich von 0,55 Mol-% bis 1,5 Mol-% in Bezug auf die Gesamtmenge an Monomer in dem Ethylencopolymer liegt;
wobei die Schmelzflussrate MFR2 der Polymerzusammensetzung im Bereich von 0,3-2,0 g/10 Minuten liegt.

2. Polymerzusammensetzung nach Anspruch 1, wobei die Polymerzusammensetzung ein gewichtsmittleres Molekulargewicht von 100.000 g/mol bis 300.000 g/mol aufweist.

3. Polymerzusammensetzung nach einem der vorhergehenden Ansprüche, wobei das Polyethylen einen Polydispersitätsindex von 13-23 aufweist.

4. Polymerzusammensetzung nach einem der vorhergehenden Ansprüche, wobei das Gewichtsverhältnis des Ethylenhomopolymers und des Ethylencopolymers in der Polymerzusammensetzung im Bereich von 45:55 bis 55:45 liegt.

5. Polymerzusammensetzung nach einem der vorhergehenden Ansprüche, ferner umfassend einen Keimbildner.

6. Polymerzusammensetzung nach Anspruch 5, wobei das Nukleierungsmittel aus Cyclohexandicarbonsäure, Calciumsalz, Zinksalz, Zinkstearat und Mischungen davon ausgewählt ist.

7. Polymerzusammensetzung nach Anspruch 6, wobei das Calciumsalz aus Calciumhexahydrophthalat oder Calciumglycerolat ausgewählt ist und/oder wobei das Zinksalz aus Zinkhexahydrophthalat oder Zinkglycerolat ausgewählt ist.

8. Behälterverschluss, umfassend die Polymerzusammensetzung nach einem der vorhergehenden Ansprüche.

9. Behälterverschluss nach Anspruch 8, erhältlich durch Spritzgießen oder Formpressen.

10. Verwendung eines Behälterverschlusses nach Anspruch 8 oder 9 als Getränkeflaschenverschluss.

## Revendications

1. Composition de polymère comprenant un homopolymère d'éthylène et un copolymère d'éthylène comprenant un comonomère en une quantité d'au moins 0,55 % en moles par rapport à la quantité totale de monomère contenue dans le copolymère d'éthylène, dans laquelle le copolymère d'éthylène a un poids moléculaire moyen en poids plus élevé que l'homopolymère d'éthylène, la composition de polymère ayant une densité située dans la plage de 0,950 à 0,965 g/cm³ mesurée selon la norme D1505 de l'ASTM, un indice de fluidité à chaud MFR₂ d'au moins 0,3 g/10 minutes mesuré selon la norme D1238 de l'ASTM, un poids moléculaire moyen en poids d'au moins 100 000 g/mol, une viscosité à une fréquence angulaire de 0,01 [1/s], No.01, d'au moins 20 000 Pa.s mesurée à l'aide d'un rhéomètre à contrainte contrôlée, de modèle MCR301 d'Anton-Paar, la géométrie étant une plaque de 25 mm de diamètre avec un intervalle de mesure de 1 mm, le cisaillement oscillatoire dynamique étant effectué à une fréquence angulaire de 0,01-600 rad/s à 190°C sous atmosphère d'azote, la préparation de l'échantillon étant effectuée en un disque circulaire de 25 mm par moulage par compression à 190°C et la viscosité à 0,01 [1/s] étant obtenue à partir de la viscosité complexe à un taux de cisaillement spécifique de 0,01 [1/s] ;
dans laquelle
la composition polymère a un Demi-Temps de Cristallisation Isotherme, qui est inférieur à 10 minutes à 123°C, dans laquelle le Demi-Temps de Cristallisation isotherme à 123°C est mesuré par DSC dans les conditions suivantes : chauffage de l'échantillon à une température de 30°C à 200°C à une vitesse de chauffage de 50°C/min et maintien en température pendant 5 minutes, puis refroidissement à 123°C à une vitesse de refroidissement de 50°C/min et maintien en température pendant 60 minutes ; et un Test de Résistance à la Fissuration sous Contrainte Élevée d'au moins 60 heures selon la norme 16770 de l'ISO ; le
comonomère étant sélectionné dans le groupe constitué d'alpha-oléfines en C4 à C10, de préférence le 1-butène, le 1- pentène, le 1-hexène, le 1-heptène, le 1-octène ou leurs mélanges :
dans laquelle la quantité de comonomère se situe dans la plage de 0,55 % en moles à 1,5 % en moles par rapport à la quantité totale de monomère contenue dans le copolymère d'éthylène ;
dans laquelle l'indice de fluidité à chaud MFR₂ de la composition de polymère se situe dans la plage de 0,3 à 2,0 g/10 minutes.

2. Composition polymère selon la revendication 1, dans laquelle la composition polymère a un poids moléculaire moyen en poids de 100 000 g/mol à 300 000 g/mol.

3. Composition polymère selon l'une quelconque des revendications précédentes, dans laquelle le polyéthylène a un indice de polydispersité de 13 à 23.

4. Composition polymère selon l'une quelconque des revendications précédentes, dans laquelle le rapport pondéral entre l'homopolymère d'éthylène et le copolymère d'éthylène dans la composition polymère se situe dans la plage de 45 : 55 à 55 : 45.

5. Composition polymère selon l'une quelconque des revendications précédentes, comprenant en outre un agent de nucléation.

6. Composition polymère selon la revendication 5, dans laquelle l'agent de nucléation est sélectionné parmi l'acide cyclohexanedicarboxylique, le sel de calcium, le sel de zinc, le stéarate de zinc et leurs mélanges.

7. Composition polymère selon la revendication 6, dans laquelle le sel de calcium est sélectionné parmi l'hexahydrophtalate de calcium ou le glycérolate de calcium et/ou dans laquelle le sel de zinc est sélectionné parmi l'hexahydrophtalate de zinc ou le glycérolate de zinc.

8. Fermeture de récipient comprenant la composition polymère selon l'une quelconque des revendications précédentes.

9. Fermeture de récipient selon la revendication 8, pouvant être obtenue par moulage par injection ou par moulage par compression.

10. Utilisation d'une fermeture de récipient selon la revendication 8 ou 9 comme bouchon de bouteille de boisson.
